# EUROPEAN PATENT SPECIFICATION

(11) **EP 0 438 989 B1**
(45) Date of publication and mention of the grant of the patent: **11.05.1994**
(21) Application number: 90830598.0
(22) Date of filing: 18.12.1990
(51) Int. Cl.: B23K 37/04, B62D 65/00

(54) **Equipment for welding motor-vehicle-body subassemblies constituted by pressed sheet-metal parts**
Einrichtung zum Schweissen von aus gepresstem Blech bestehenden Baugruppen von Motorfahrzeugkarosserien
Equipement de soudage de sous-assemblages de carrosserie de véhicules à moteur constituées de parties en tôle pressée

(30) Priority: 24.01.1990 IT 6704890
(43) Date of publication of application: 31.07.1991
(73) Proprietor: FIAT AUTO S.p.A., 10135 Torino (IT)
(72) Inventor: Guasco, Luciano, I-10133 Torino (IT)
(74) Representative: Bosotti, Luciano

(56) References cited:
- WO-A-86/03153
- FR-A- 2 383 818
- GB-A- 2 175 546

## Description

The present invention relates to equipment for welding motor-vehicle-body subassemblies constituted by pressed sheet-metal parts which have been assembled loosely beforehand, of the type indicated in the pre-characterising portion of the annexed claim 1.

GB-A-2 175 546 discloses such an equipment for welding motor-vehicle-body subassemblies constituted by pressed sheet-metal parts loosely assembled beforehand, including two welding stations at which are respectively located two different positioning frames, in order to make possible to weld four different subassemblies.

EP-A-353 753, which is a reference cited by virtue of Article 54(3) EPC, relates to a welding station wherein three positioning frames are necessary to clamp a structure to be welded in the correct position for welding.

An equipment for welding pressed sheet-metal structures is the subject, for example, of German Patent No. DE-B-2 810 822, the corresponding British Patent No. GB-B-1 564 669, and the corresponding French Patent No. FR-B-2 383 818. This known equipment relates specifically to the welding of motor-vehicle bodies. The welding is carried out by a robot which makes a sufficient number of spot welds to provide the body with a stable geometry while it is clamped in the correct welding position by the respective positioning frame (in the case of the prior art document cited, two positioning frames are provided for each body). The robot effects the spot welding in a predetermined program which depends on the type of body being welded. Similarly, the positioning frames are brought to the working position at the welding station according to the type of body situated at the welding station. Once the welding has been carried out, the body proceeds to subsequent work stations without further need for the positioning devices since the sport welds are sufficient to maintain the correct geometry. The time needed to replace the positioning frame situated at the working position does not exceed the time needed to bring a structure to be welded to the welding station. The use of this apparatus does not, therefore, reduce the production rate. At the same time it makes the production plant very flexible so that it can operate on various body types. Similarly, when a new motor-vehicle model is brought into production, the plant can be adapted very quickly and efficiently to the new model since all that is necessary is to provide the corresponding positioning frame and a new program for the welding robots. The heavy retooling costs and prolonged production stoppages which were necessary before the use of the said apparatus are thus avoided.

Naturally there is an interest in using such technology not only for welding a complete body but also for welding a body subassembly such as, for example, a side or a floor with the attached front supporting framework for the engine. In the current state of the art, body subassemblies are in fact generally welded by equipment which has no flexibility. This involves the use of a specific line for each car model which leads to a high equipment cost and expensive handling and storage systems as well as taking up a very large area for its installation.
If, on the other hand, it is wished to use the technology of flexible systems for welding complete bodies for welding subassemblies as well, one is faced with the problem of devising a plant which can achieve the required degree of flexibility without penalising production times and costs. This problem is even more important whenever the flexible plant is installed initially for work on a single type of bodywork subassembly since the flexibility is required solely in order to enable new types of subassembly to be brought into production in the future with the use of the same plant.

In order to resolve the said problem, the present invention provides equipment for welding motor-vehicle-body subassemblies constituted by pressed sheet-metal parts which have been assembled loosely beforehand, of the type indicated at the beginning of the present description, having the features set forth in the characterising portion of claim 1.

By virtue of the said characteristics, the equipment according to the invention enables various types of body subassembly to be welded together. At the same time, the equipment is formed in such a way that it is relatively cheap, enables fast production times, and occupies quite a small area.

When a different type of subassembly from that previously welded reaches the welding station, the equipment can arrange the corresponding positioning frame at the working position within a time which preferably does not exceed the time needed to bring the two subassemblies to the station. The new subassembly is then positioned correctly by the respective positioning frame while the welding is carried out by the robots which execute a sufficient number of spot welds, predetermined by a program which depends on the particular type of subassembly to be welded, to provide the structure with a fairly stable geometry.

The invention will now be described with reference to the appended drawings, provided purely by way of non-limiting example, in which:
- Figure 1 is a perspective view of a body floor and attached front framework, welded together by means of the equipment according to the invention,
- Figure 2 is an exploded perspective view of the subassembly of Figure 1 showing the sheet-metal parts constituting the subassembly,
- Figure 3a is a plan view showing schematically a first part of a production line which includes the equipment according to the invention,
- Figures 3b, 3c show two further parts of the production line of Figure 3a,
- Figure 4 is a schematic perspective view of part of the equipment according to the invention,
- Figure 4a is a diagrammatic plan view of part of the equipment,
- Figure 5 is a schematic plan view of a further detail of the equipment according to the invention,
- Figure 6 is a sectional view taken on the line VI-VI of Figure 3c,
- Figure 7 is a schematic sectional view taken on the line VII-VII of Figure 3c,
- Figures 8 to 11 are sections taken on the lines VIII, IX, X and XI of Figure 5.

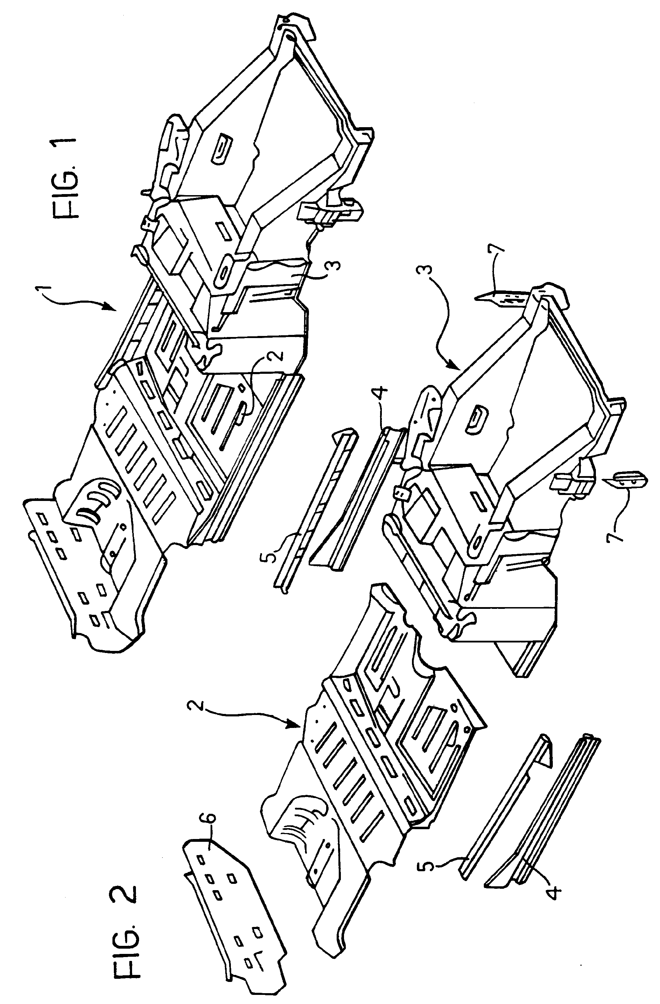

Figures 1 and 2 show a motor-vehicle body subassembly, generally indicated 1, constituted by a plurality of pressed sheet-metal parts which can be welded together by the equipment of the invention. The subassembly 1 comprises the body floor 2, which defines the floor of the passenger compartment and the rear luggage compartment, and a front framework 3 for housing and supporting the motor-vehicle engine . In addition to the said two main components, there are also two side members 4 and two longitudinal straps 5 for fixing to the two sides of the floor 2, a rear wall 6 and two supports 7 for welding to the front parts of the two sides of the framework 3 to enable the subsequent fitting of the front mudguards of the motor vehicle.

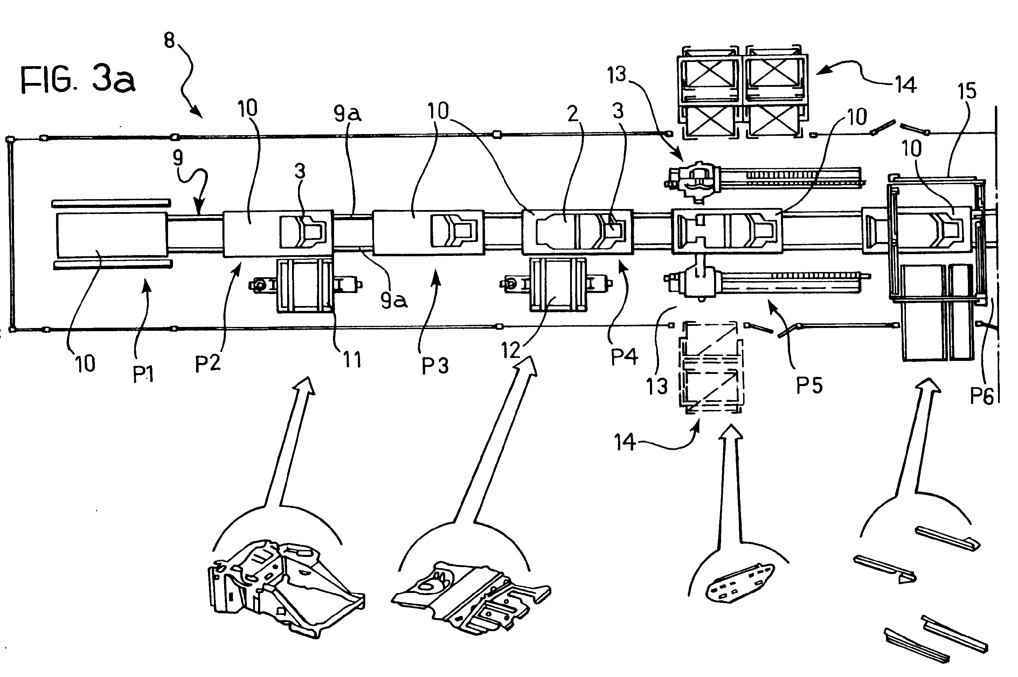

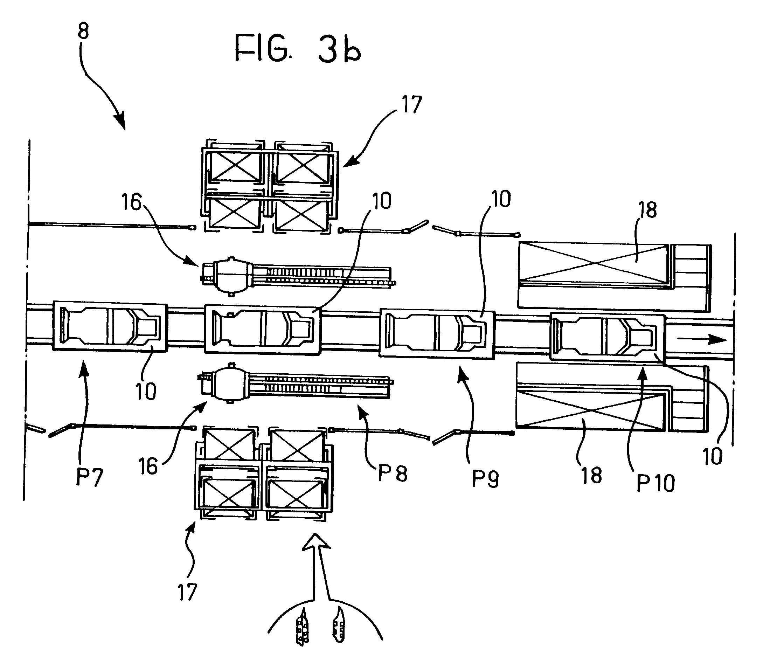

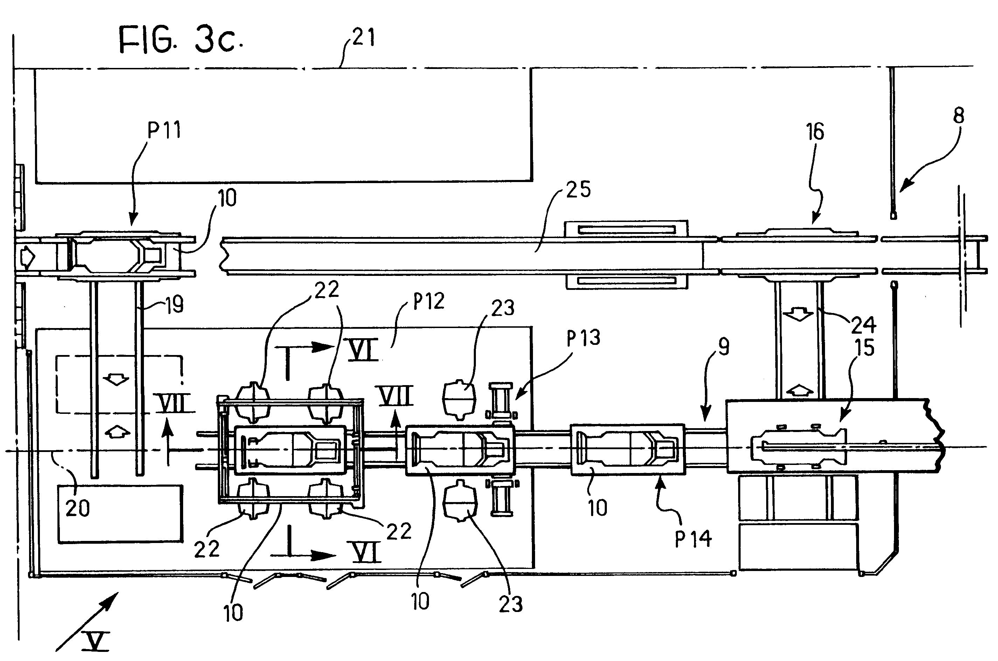

The body subassembly 1 is assembled in a production plant which is generally indicated 8 in Figures 3a, 3b and 3c. The plant 8 includes a conveyor line 9 on which a plurality of pallets 10 move in line, one behind the other, each receiving the various parts of a respective body subassembly in succession until the complete subassembly is formed, and then carrying the structure, thus pre-assembled, to the welding station which forms part of the equipment of the invention. The various parts of the subassembly are simply placed adjacent each other on the pallets without any interconnection. The term "loose preassembly" of the elements is used in the present description to refer to the aforesaid situation. In theory, it would also be possible to provide temporary connections, for example with bent tongues, as is common in the art for the welding of complete bodies.

In Figure 3a, the pallet 10 shown furthest to the left is at the start of the line 9. The pallet has reached this position after travelling along an underground return line which receives the empty pallets at the end of the line and returns them to the start. A device of known type (not visible in the drawings) is provided at the position shown at the left-hand end in Figure 3a for moving the pallets vertically from the underground return line (not visible in Figure 3a) to the start of the line 9. From this starting position, indicated P1 in Figure 3a, the pallet 10 starts to move to the right (with reference to Figure 3a) and, as already indicated, receives the various parts of a respective body subassembly in succession.

As will be explained in greater detail below, the embodiment described here makes use of motor-driven pallets which move on two longitudinal rails 9a constituting the line 9. Obviously, however, the particular structures and conformation of the line 9 and of the platforms for supporting the subassemblies to be welded may differ from those shown purely by way of example.

At the position indicated P2 in Figure 3a, the front framework 3 is loaded by means of an automatic loading device 11. The position P3 is a change-over position which enables new loading devices to be introduced should this become necessary in future if a new type of subassembly is brought into production. At the position P4, the floor 2 is loaded by means of an automatic loading device 12. At the position P5, the rear wall 6 is loaded by means of robots 13 which take the elements to be loaded from stores 14. At the position P6, the side members 4 and the longitudinal straps 5 are loaded by means of an automatic loading device 15. The position P7 is a change-over position similar to position P3 (Figure 3b). At the position P8, robots 16 take supports 7 from stores 17 and load them on to the pallet. The position P9 is another change-over position, whilst the position P10 is also a change-over position with two lateral parking areas 18 where damaged pallets can be placed to avoid the line being stopped during their repair.

At the position P11 (Figure 3c), the pallet 10 is taken by a trolley which is guided on a transverse line 19 and which carries the pallet into alignment with an axis 20 along which the line 9 continues. In the embodiment illustrated, this is done because the plant provides for the possibility of duplicating the part of the line 9 which comes after the position P11 along an axis 21 parallel to the axis 20. Once it has reached that portion of the line 9 aligned with the axis 20, the pallet enters the welding station P12 which forms part of the equipment of the invention. The structure of this station will be described in detail below. At the station P12, the sheet-metal parts constituting the body subassembly are clamped in their correct positions for assembly and are then welded by a plurality of welding robots 22. Upon completion of the welding operation, the pallet advances to the position P13 where the welding is completed by two further robots 23. At the station P13, no further devices are needed to clamp the subassembly parts in the welding position since the spot welds executed at the station P12 are sufficient to provide the subassembly with a stable geometry. From the position P13, the pallet 10 passes through a position P14 to a position P15 where the welded subassembly is taken from the pallet and forwarded to subsequent operations (the execution of further spot welds, the welding of threaded pins for enabling further parts of the motor vehicle to be connected to the floor, etc.). From the position P15, the empty pallet is moved transversely by means of the guide 24 to a position P16 where it descends to the level of a return line 25 which returns the pallet to the position P1.

Before they arrive at the welding station P12, the various parts of a subassembly - as already indicated - are simply placed side by side on a pallet, approximately in their final welding positions, without any firm interconnection. The pallet has locating devices for positioning the various parts of the subassembly.

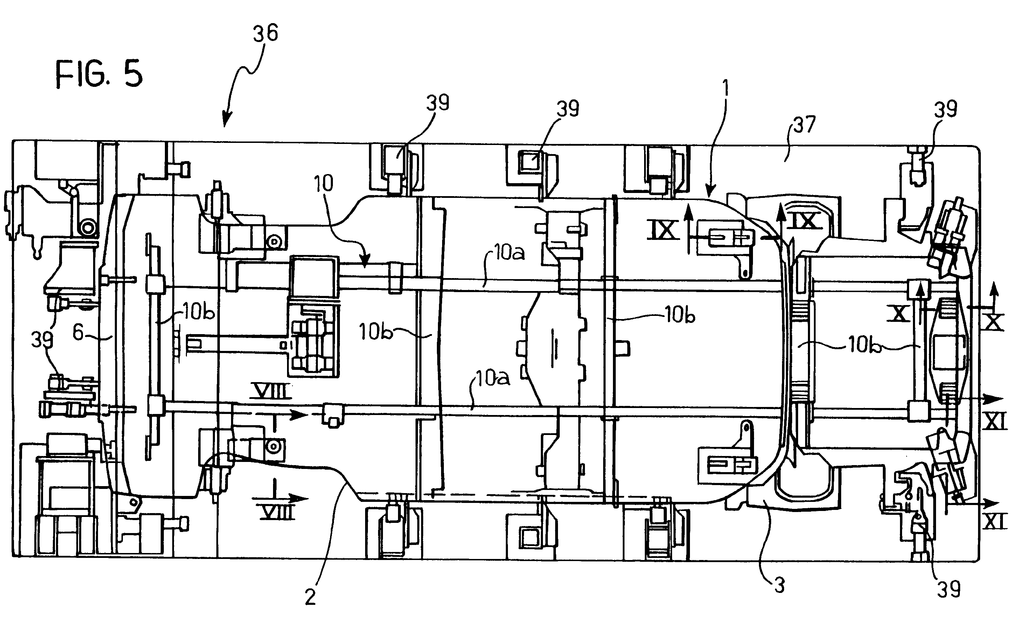

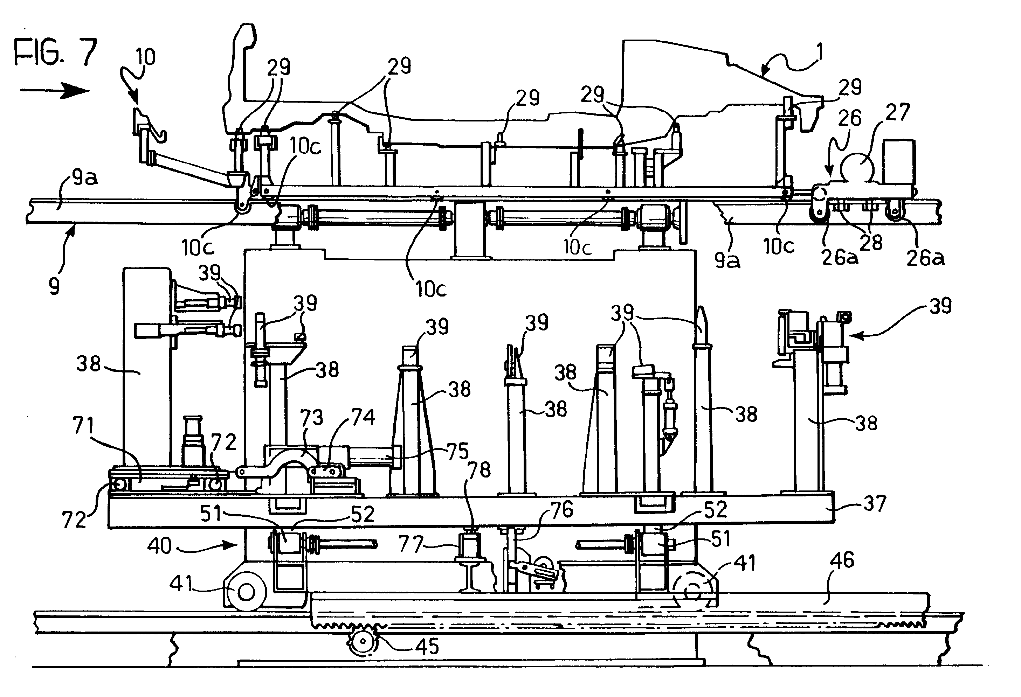

A typical example of a pallet can be seen in Figures 5, 6 and 7 which show a plan view, a front view and a side view thereof respectively. In this example, the pallet 10 is constituted by a metal framework comprising two side members 10a interconnected by a plurality of cross members 10b. The framework has wheels 10c which are guided on the two rails 9a of the line 9. The pallet 10 is also connected to a front trolley 26 which also has wheels 26a guided on the rails 9a and provided with an on-board electric motor 27 which drives wheels 28 which have vertical axes and engage the rails 9a to advance the trolley along the line 9 by friction. The pallet 10 has a plurality of supports and locating pins 29 which position the various parts of the subassembly 1 in the correct positions (Figure 7). The conformation of the pallet therefore depends on the particular type of subassembly to be welded. The system described above must consequently be provided with a plurality of pallets for each of the different types of subassembly to be welded. The embodiment described with reference to Figures 3a, 3b and 3c lends itself, for example, for use in the production of two or more different types of subassembly. Stores for the different types of elements to be loaded may be provided in correspondence with the loading positions P2, P4, P5, P6 and P8.

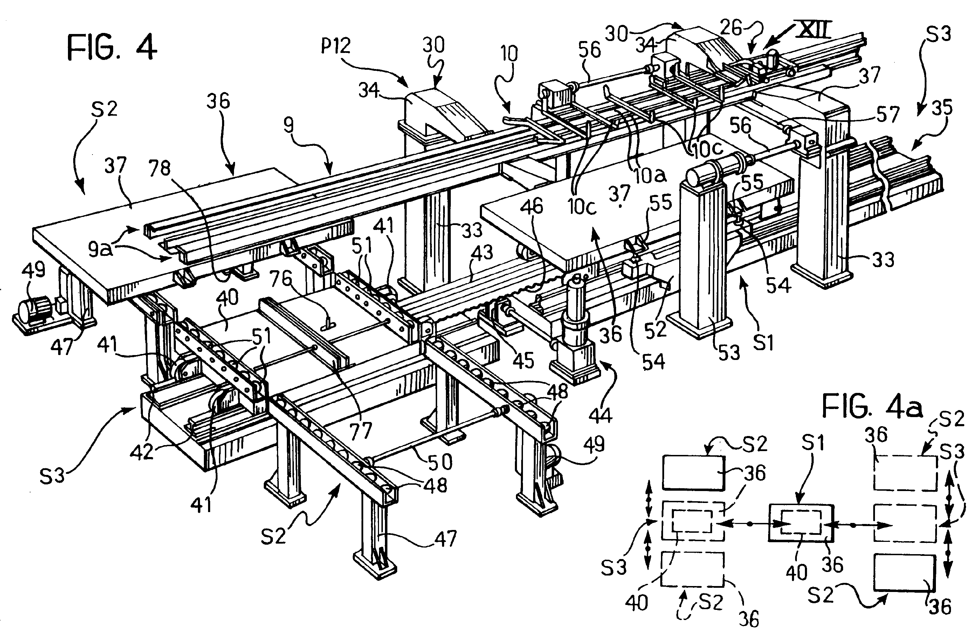

A preferred embodiment of the equipment of the invention will now be described in detail with reference to Figures 4-11 of the appended drawings.

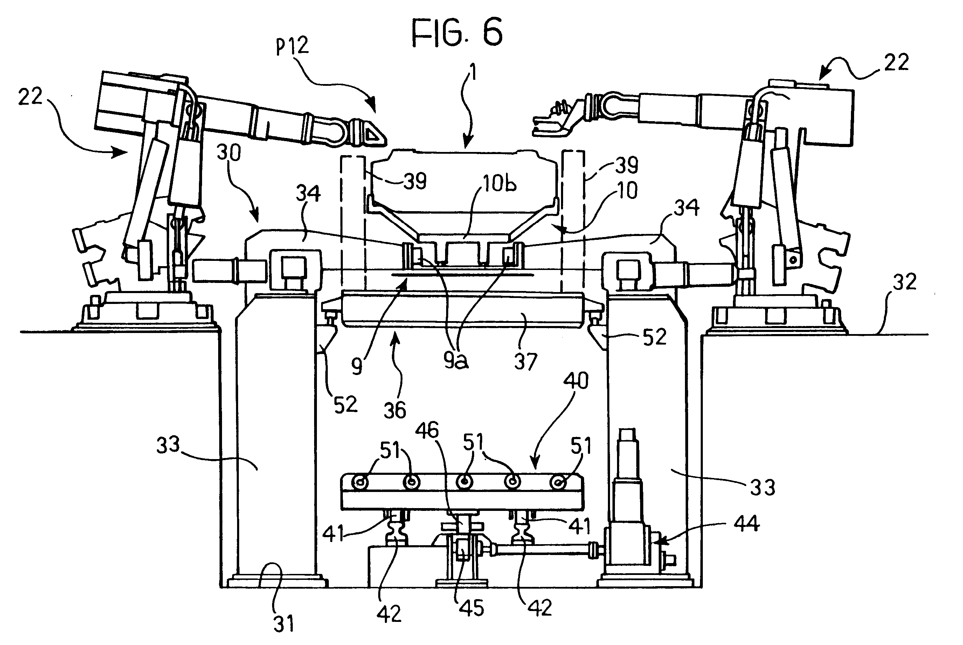

As can be seen in Figures 4 and 6, the rails 9a of the line 9 are supported at the welding station P12 by two portal structures 30 which rest on a floor 31 (Figure 6) at a lower level than the floor 32 on which the welding robots 22 (which are not shown in Figure 4 for clarity) stand. Each portal structure 30 comprises two pillars 33 on which are cantilevered two cross members 34 whose free ends support the line 9.

Below the plane of the conveyor line 9 is a transportation system 35 for a plurality of positioning frames for clamping the subassemblies at the welding station in their correct welding positions so as to enable the welding to be carried out by the robots 22. The same number of positioning frames are provided as there are different types of subassembly to be welded, each frame being provided with clamping devices shaped and arranged to accord with a respective type of subassembly.

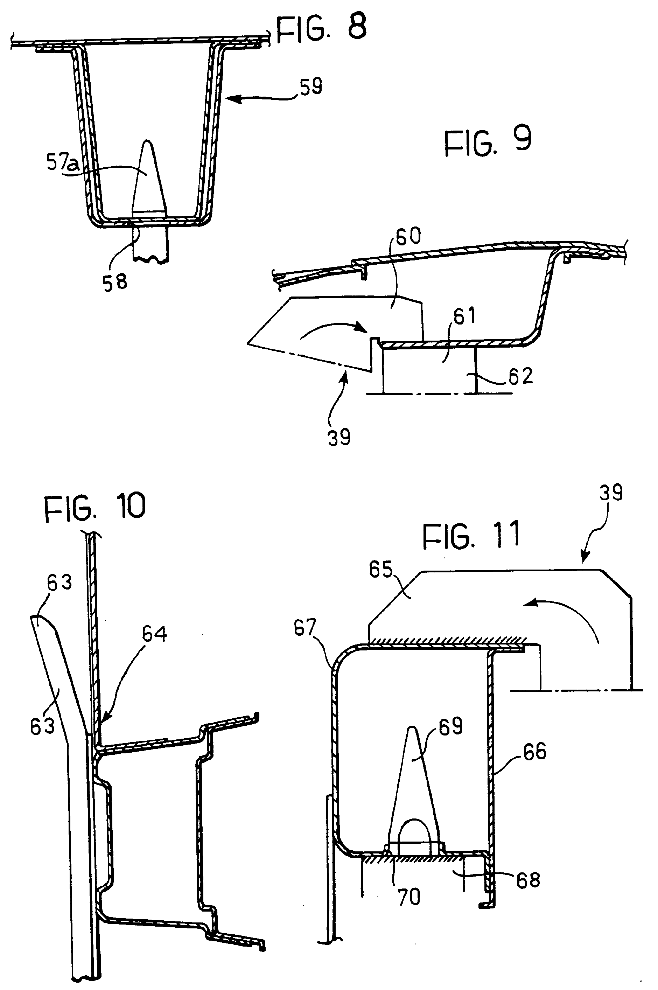

Each positioning frame, indicated 36 in the drawings, comprises a platform 37 on which are mounted a plurality of pillars and supports 38 provided with clamping and positioning devices 39 (see Figures 5 and 7). Only some of the structural details of the clamping devices 39 will be described below with reference to Figures 8-11 since these devices are of known type and do not fall within the scope of the present invention. The elimination of these details from the drawings also makes the latter more readily and easily understood. Again, for ease and clarity of illustration, only the base platforms 37 of the positioning frames 36 are visible in Figures 4 and 6 whilst the clamping equipment is shown only schematically in broken outline in Figure 6.

As shown schematically in Figure 4a, which is a plan view of the transportation system 35, this system includes a base position S1 and - in the embodiment illustrated - four peripheral rest positions S2. Finally, two end positions S3 are provided and act as intermediate positions for the frames as they move between the base position S1 and the peripheral positions S2.

The transportation system includes a pair of trolleys 40 which are rigidly interconnected and have wheels 41 guided on two rails 42 in the direction in which the positions S1 and S3 are aligned. The two trolleys 40 are movable on the rails 41 between two working positions. In the working position shown in Figure 4a, one of the two trolleys 40 is situated in the base position S1 while the other trolley 40 is situated in one of the two positions S3. From this position, the two trolleys 40 can be moved to the right (with reference to Figure 4a) to a position in which the trolley 40 which was in the base position S1 has moved into the intermediate position S3, shown on the right in Figure 4a, whilst the other trolley 40 has reached the base position S1.

In the embodiment shown in Figure 4, the two trolleys 40 (the trolley 40 situated in the position S1 is not visible since it is concealed by the platform 37 of a positioning frame 36) are interconnected by longitudinal beams 43. The two trolleys are moved by a geared motor unit 44 by means of a pinion 45 which engages a set of teeth 46 carried by the longitudinal beams 43 which interconnect the two trolleys 40 (see also Figure 7).

When a trolley 40 is in one of the positions S3, it enables a positioning frame to be transferred between the trolley and one of the facing peripheral positions S2. For example, in the case shown in Figure 4, the trolley 40 situated in one position S3 is ready to receive the positioning frame 36 which is situated in a position S2. The positioning frame 36 can be moved between the position S2 and S3 by any known means. In the embodiment illustrated, this is achieved by the provision, in the positions S2, of fixed frames 47 which support two sets of motor-driven rollers 48 aligned in a horizontal plane. One set of rollers 48 is driven directly by a motor 49 whilst the other set is driven by the same motor 49 with the interposition of a transmission shaft 50. Each trolley is also provided with two sets of motor-driven rollers 51 which are aligned with the sets of rollers 48 of the position S2 when the trolley is in the position S3. The platform 37 of each positioning frame 36 has two transverse sliding blocks 52 (Figure 7) on its underside for engaging the motor-driven rollers 51 of the trolley 40 and the motor-driven rollers 48 of the positions S2.

The equipment according to the invention also includes means for transporting a positioning frame 36 vertically between the base position S1 and a raised position (see Figure 6) in which the positioning devices 39 can engage the various parts of a subassembly carried by the pallet 10 which is situated at the welding station. In the embodiment illustrated, this vertical movement is achieved by means of two vertically-movable slides 52 each of which is mounted for vertical movement on a pillar 53 and carries two supports 54 for engaging a corresponding two brackets 55 projecting from the platform 37 of the positioning frame 36 to enable the frame to be raised. Each slide 52 can be moved vertically, for example by means of a screw actuator of known type (not visible in the drawings) housed in the pillar 53. The two drive screws of the actuators associated with the pillars 53 are interconnected by a transmission constituted by two longitudinal shafts 56 and a transverse shaft 57 arranged astride the line so as to ensure that the two slides 52 move in synchronism.

The equipment according to the invention operates as follows.

When a pallet 10 carrying a subassembly to be welded reaches the welding station P12, the positioning frame 36 corresponding to the specific type of subassembly is ready in the base position S1. Once the pallet 10 has stopped at the station P12, the slides 52 are operated to take the frame 36 from the respective trolley 40 and to bring it into the working position shown in Figure 6. In this position, the various clamping devices carried by the frame 36 come into action and engage the various parts of the subassembly. Figures 8-11 show, in section and on an enlarged scale, some examples relating to the engagement of the location and clamping means 39 carried by the positioning frame 36 with the various parts of the subassembly. Figure 8 shows a locating pin 57a which engages a centering hole 58 in a sheet metal section 59 which forms part of the structure to be welded. Figure 9 shows a clamping jaw 60 in its operative position in which it pushes a sheet-metal wall 61, forming part of the structure to be welded, against an abutment element 62. Figure 10 shows a locating member 63 carried by the pallet 10 which serves to position a portion 64 of the subassembly correctly on the pallet. Figure 11 shows a clamping jaw 65 in its operative position for clamping two sheet-metal parts 66, 67 in the correct relative positions to define a profile with a closed cross-section. The jaw 65 achieves the clamping with the aid of an abutment element 68 on which the element 67 bears and which has a locating pin 69 which engages a hole 70 in the element 67.

Naturally, the arrangements shown in Figures 8-11 are indicated purely by way of example in order better to explain the function of the positioning frames 36. Generally, the various parts of the subassembly on which the clamping devices 39 act are already arranged in approximately the correct assembly positions on the pallet 10. It is, however, also possible to provide (and in the embodiment illustrated this is done, for example, in the case of the rear wall 6 and the longitudinal straps 5) for some of the parts of the subassembly to be placed in positions spaced from their final positions of assembly. In this case, the positioning frame is provided with means for picking up the said parts and carrying them to closer position of assembly.

Once the clamping devices 39 have positioned the structure constituting the subassembly 1 correctly, the robots 22 operate to effect a sufficient number of spot welds to provide the structure with a stable geometry. Once the welding is completed, the robots 22 are retracted and the clamping devices are disengaged to enable the pallet 10 to leave the station P12 and a new pallet carrying a new subassembly to be welded to arrive. If the incoming subassembly is of the same type as the subassembly previously welded, the positioning frame 36 remains in its raised position so as to enable the positioning devices 39 to engage the various parts of the subassembly immediately. When the incoming subassembly is of a different type, however, for example of the type which must be located and clamped by the positioning frame 36 shown in a position S2 in Figure 4, the system for transporting the positioning frames exchanges the positioning frames whilst the preceding subassembly is being welded. More precisely, whilst the preceding subassembly is still in the welding phase, the frame 36 which is in the position S2 in Figure 4 is brought to the position S3 on the trolley 40 which is shown in the empty condition in Figure 4. When the welding has been completed, the slides 52 return the positioning frame 36 which had acted on the preceding subassembly downwardly to the position S1 and place it on the trolley 40. When this has been accomplished, the pair of trolleys 40 is translated longitudinally so as to bring the positioning frame 36 which was originally in the position S2 to the position S1. When it has reached the base position S1, the frame 36 is raised by the slides 52 and brought to the raised working position of Figure 6. All the aforesaid movements are preferably executed in a time no longer than the time needed to replace the pallet situated at the welding station P12 so as not to affect production times.

It will be seen that, in Figure 4, for clarity, the positions S2 located upstream of the welding station have been shown whilst the other two positions S2 (Figure 4a), situated downstream of the welding station, have not been shown.

As already indicated above, a specific positioning frame must be provided for each different type of subassembly. It is possible, however, that the same positioning frame may act on subassemblies which differ only in part. For example, in the case of the floors of the saloon and the estate car versions of the same model, the differences may be limited to different floor lengths and/or to differently shaped rear parts. The same positioning frame may, for example, be provided with two types of clamping devices which operate selectively in dependence on the type of subassembly to be clamped. Alternatively, as shown for example in Figure 7, the rear part of a positioning frame 36 may be movable so as to adapt itself to different floor lengths. In the embodiment of Figure 7, the pillar 38 and the clamping devices 39 carried thereby which are provided on the rear part of the platform 37 are mounted on a trolley 71 with wheels 72 guided on the platform 37. The trolley 71 is connected by a connecting member 73 to a crank 74 carried by the platform 37 and rotatable by the means of an actuator 75. In the condition shown in Figure 7, the trolley 71 is situated in its end position in which the positioning frame is ready to engage a longer subassembly. When the frame has to operate on a shorter subassembly, the crank 74 is rotated through an angle of about 90° in a clockwise sense (with reference to Figure 7) so as to move the trolley 71 and the clamping devices 39 mounted thereon towards the front end of the platform.

With reference again to the system for transporting the positioning frames 36, it should be noted that each trolley 40 has an obturator of any known type, indicated 76 in Figures 4 and 7, which engages a seat provided in the lower surface of the platform 37 to provide a reference for the correct location of the positioning frame 36 on the trolley 40. The trolley 40 also has a transverse guide 77 which receives a member 78 projecting from the lower surface of the platform 37 to provide a further reference for the correct location of the frame 36 on the trolley 40.

Naturally, the principle of the invention remaining the same, the details of construction and forms of embodiment may be varied widely with respect to those described and illustrated purely by way of example, without thereby departing from the scope of the present invention as defined in the claims.

## Claims

1. Equipment for welding motor-vehicle-body subassemblies (1) constituted by pressed sheet-metal parts assembled loosely beforehand, comprising:
- a station (P12) for welding the preassembled structures (1),
- a conveyor line (9) for conveying the preassembled structures (1) to the welding station (P12) in succession,
- a plurality of positioning frames (36), each individual positioning frame (36) being adapted to the specific shape of a respective type of preassembled structure (1) and being provided with positioning devices (39) for clamping all the preassembled parts of a respective type of structure (1) in the correct positions for welding,
- transportation means for the positioning frames (36), for moving the frames (36) between a plurality of peripheral rest positions (S2) and a working position at the welding station (P12) wherein a frame (36) clamps in the correct position a preassembled structure (1) which is situated at the welding station (P12), said transportation means including a system for transporting the frames (36) in a plane beneath the plane of the subassembly conveyor line (9),
- at least one welding device (22) for welding the preassembled structure (1) situated at the welding station (P12),
characterised in that:
a) said system for transporting the frames (36) includes a base position (S1) which is separated from the working position and is located beneath the welding station (P12),
b) the transportation means for the positioning frames (36) further include means (52) for moving a positioning frame (36) vertically between the base position (S1), in which the positioning devices (39) of the frame (36) are separated from a subassembly (1) which is situated at the welding station (P12), and the working position, in which the positioning devices (39) of the frames (36) can position a subassembly which is situated at the welding station (P12),
c) the system for transporting the frames (36) also includes trolley means (40) for moving simultaneously one positioning frame (36) from the base position (S1) to a rest position (S2) and another positioning frame (36) to the base position (S1), such trolley means (40) being movable between two intermediate positions (S3) aligned in a direction parallel to the conveyor line (9) and arranged on opposite sides of the base position (S1), each intermediate position (S3) being in a position intermediate two peripheral rest positions (S2) aligned transverse the conveyor line (9).

2. Equipment according to Claim 1, characterised in that the system for transporting the positioning frames (36) includes a pair of trolleys (40) rigidly connected to each other and mounted for movement along the direction of alignment of the base position (S1) and the intermediate positions (S3), the trolleys being movable simultaneously between a first position, in which a first trolley (40) is in the base position (S1) and a second trolley (40) is in one of the two intermediate positions (S3), and a second position in which the first trolley (40) is in the other intermediate position (S1) and the second trolley (40) is in the base position (S1), the trolleys being adapted each to receive and support a positioning frame (36) so as to enable the frame to be moved between the base position (S1) and an intermediate position (S3).

3. Equipment according to Claim 2, characterised in that a framework (47) is provided in correspondence with each peripheral rest position (S2) and carries means for receiving and supporting a positioning frame (36) and means for moving a positioning frame (36) between the peripheral position (S2) and the adjacent intermediate position (S3).

4. Equipment according to Claim 3, characterised in that the two trolleys (40) have wheels (41) which engage guide rails (42) which extend parallel to the conveyor line (9) in a plane below the plane of the conveyor line (9), the trolleys (40) being connected rigidly to a longitudinal set of teeth (46) which engages a drive pinion (45) connected for rotation with the output shaft of a geared drive motor (44).

5. Equipment according to Claim 4, characterised in that the means provided in correspondence with the peripheral rest positions (S2) for moving the positioning frames (36) between the rest positions (S2) and the respective intermediate position (S3) comprise a set of motor-driven rollers (48), each trolley (40) also being provided with a corresponding set of motor-driven rollers (51).

6. Equipment according to Claim 1, characterised in that the means for moving a positioning frame (36) vertically between the base position (S1) and the working position comprise a pair of vertically-movable slides (52) provided with supports (54) for holding and supporting the positioning frame (36).

7. Equipment according to Claim 1, characterised in that it includes a plurality of programmable welding robots.

8. Equipment according to Claim 1, characterised in that at least one positioning frame is arranged to act on two types of subassembly which differ from each other in a limited manner.

9. Equipment according to Claim 1, characterised in that the conveyor line (9) for the subassemblies to be welded includes a guide rail (9a) and a plurality of motor-driven pallets (10) guided on the rail (9a) and adapted each to support a subassembly to be welded.

10. Equipment according to Claim 9, characterised in that each pallet (10) is constituted by a metal framework including two side members (10a) interconnected by a plurality of cross members (10c), each pallet (10) being provided with location and centering means (20) for locating the various parts of the subassembly correctly on the pallet.

11. Equipment according to Claim 10, characterised in that the pallet has wheels (10c) guided on the guide rail (9a) and is connected to a motor-driven trolley (26) which is also guided on the rail (9a).

12. Equipment according to Claim 3, characterised in that each trolley (40) has positioning means (76, 77) for locating a positioning frame (36) correctly on the trolley (40).

13. Equipment according to Claim 1, characterised in that each positioning frame (36) comprises a base platform (37) carrying a plurality of support pillars (38) each of which in turn supports at least one clamping or locating device (39).

14. Equipment according to Claim 13, characterised in that at least some of the clamping devices (39) are carried by a trolley (71) which is movable on the base platform (37) to enable the positioning frame (36) to be adapted for use with subassemblies of different lengths.

15. Equipment according to Claim 13, characterised in that an underground line is associated with the conveyor line (9) for returning empty pallets (10) from the final end of the conveyor line (9), from which the welded subassemblies are removed, to the starting end of the conveyor line (9) where parts of a new subassembly start to be loaded on the pallet (10).

## Patentansprüche

1. Einrichtung zum Schweißen von Kraftfahrzeugkarosserie-Baugruppen (1), die durch gepreßte, zuvor lose montierte Blechteile gebildet sind, umfassend:
- eine Station (P12) zum Schweißen der vormontierten Strukturen (1),
- eine Förderstraße (9) zum sukzessiven Fördern der vormontierten Strukturen (1) zur Schweißstation (P12),
- eine Mehrzahl von positionierungsrahmen (36), wobei jeder einzelne positionierungsrahmen (36) an die spezielle Gestalt eines jeweiligen Typs von vormontierter Struktur (1) angepaßt und mit Positionierungsvorrichtungen (39) zum Festlegen aller vormontierten Teile eines jeweiligen Typs von Struktur (1) in den zum Schweißen korrekten Positionen versehen ist,
- Transportmittel für die positionierungsrahmen (36) zum Bewegen der Rahmen (36) zwischen einer Mehrzahl peripherer Ruhepositionen (S2) und einer Arbeitsposition an der Schweißstation (P12), in welcher ein Rahmen (36) eine vormontierte Struktur (1), die sich an der Schweißstation (P12) befindet, in der korrekten Position festlegt, wobei die Transportmittel ein System zum Transportieren der Rahmen (36) in einer Ebene unterhalb der Ebene der Baugruppenförderstraße (9) umfassen,
- wenigstens eine Schweißvorrichtung (22) zum Schweißen der sich an der Schweißstation (P12) befindenden vormontierten Struktur (1),
dadurch gekennzeichnet, daß:
a) das System zum Transportieren der Rahmen (36) eine Grundposition (S1) umfaßt, welche von der Arbeitsposition getrennt ist und sich unterhalb der Schweißstation (P12) befindet,
b) die Transportmittel für die Positionierungsrahmen (36) ferner Mittel (52) zum vertikalen Bewegen eines Positionierungsrahmens (36) zwischen der Grundposition (S1), in der die Positionierungsvorrichtungen (39) des Rahmens (36) von einer Baugruppe (1), die sich an der Schweißstation (P12) befindet, getrennt sind, und der Arbeitsposition, in der die Positionierungsvorrichtungen (39) des Rahmens (36) eine Baugruppe, die sich an der Schweißstation (P12) befindet, positionieren können,
c) das System zum Transportieren der Rahmen (36) auch Transportwagenmittel (40) zum gleichzeitigen Bewegen eines Positionierungsrahmens (36) von der Grundposition (S1) zu einer Ruheposition (S2) und eines weiteren Positionierungsrahmens (36) zur Grundposition (S1) umfaßt, wobei solche Transportwagenmittel (40) zwischen zwei Zwischenpositionen (S3) bewegbar sind, die in einer zur Förderstraße (9) parallelen Richtung ausgerichtet und auf gegenüberliegenden Seiten der Grundposition (S1) angeordnet sind, wobei jede Zwischenposition (S3) in einer Position zwischen zwei peripheren, quer zur Förderstraße (9) ausgerichteten Ruhepositionen (S2) liegt.

2. Einrichtung nach Anspruch 1,
dadurch gekennzeichnet, daß
das System zum Transportieren der Positionierungsrahmen (36) ein Paar von Transportwagen (40) umfaßt, die starr miteinander verbunden und zur Bewegung längs der Richtung der Ausrichtung der Grundposition (S1) und der Zwischenpositionen (S3) angebracht sind, wobei die Transportwagen gleichzeitig zwischen einer ersten Position, in der ein erster Transportwagen (40) in der Grundposition (S1) ist und ein zweiter Transportwagen (40) in einer der zwei Zwischenpositionen (S3) ist, und einer zweiten Position, in der der erste Transportwagen (40) in der anderen Zwischenposition (S1) ist und der zweite Transportwagen (40) in der Grundposition (S1) ist, bewegbar sind, wobei jeder der Transportwagen dazu ausgebildet ist, einen Positionierungsrahmen (36) aufzunehmen und zu tragen, um zu ermöglichen, daß der Rahmen zwischen der Grundposition (S1) und einer Zwischenposition (S3) bewegt wird.

3. Einrichtung nach Anspruch 2,
dadurch gekennzeichnet, daß
ein Rahmenwerk (47) in Übereinstimmung mit jeder peripheren Ruheposition (S2) vorgesehen ist und Mittel zum Aufnehmen und Tragen eines Positionierungsrahmens (36) sowie Mittel zum Bewegen eines positionierungsrahmens (36) zwischen der peripheren Position (S2) und der benachbarten Zwischenposition (S3) trägt.

4. Einrichtung nach Anspruch 3,
dadurch gekennzeichnet, daß
die zwei Transportwagen (40) Räder (41) aufweisen, die mit Führungsschienen (42) in Eingriff stehen, welche parallel zur Förderstraße (9) in einer Ebene unterhalb der Ebene der Förderstraße (9) verlaufen, wobei die Transportwagen (40) starr mit einer längs ausgerichteten Gruppe von Zähnen (46) verbunden sind, welche mit einem Antriebsritzel (45) in Eingriff stehen, das zur Rotation mit der Ausgangswelle eines mit Getriebe versehenen Antriebsmotors (44) verbunden ist.

5. Einrichtung nach Anspruch 4,
dadurch gekennzeichnet, daß
die in Übereinstimmung mit den peripheren Ruhepositionen (S2) vorgesehenen Mittel zum Bewegen der Positionierungsrahmen (36) zwischen den Ruhepositionen (S2) und der jeweiligen Zwischenposition (S3) eine Gruppe motorgetriebener Rollen (48) umfassen, wobei auch jeder Transportwagen (40) mit einer entsprechenden Gruppe motorgetriebener Rollen (51) versehen ist.

6. Einrichtung nach Anspruch 1,
dadurch gekennzeichnet, daß
die Mittel zum vertikalen Bewegen eines Positionierungsrahmens (36) zwischen der Grundposition (S1) und der Arbeitsposition ein Paar vertikal bewegbarer Gleitstücke (52) umfassen, die mit Trägern (54) zum Halten und Tragen der Positionierungsrahmen (36) versehen sind.

7. Einrichtung nach Anspruch 1,
dadurch gekennzeichnet, daß
sie eine Mehrzahl programmierbarer Schweißroboter umfaßt.

8. Einrichtung nach Anspruch 1,
dadurch gekennzeichnet, daß
wenigstens ein Positionierungsrahmen dazu ausgeführt ist, auf zwei Baugruppentypen einzuwirken, die sich in begrenzter Weise voneinander unterscheiden.

9. Einrichtung nach Anspruch 1,
dadurch gekennzeichnet,
daß die Förderstraße (9) für die zu schweißenden Baugruppen eine Führungsschiene (9a) und eine Mehrzahl motorgetriebener Paletten (10) umfaßt, welche an der Schiene (9a) geführt sind und von denen jede dazu ausgebildet ist, eine zu schweißende Baugruppe zu tragen.

10. Einrichtung nach Anspruch 9,
dadurch gekennzeichnet, daß
jede Palette (10) durch ein Metallrahmenwerk gebildet ist, das zwei durch eine Mehrzahl von Querelementen (10c) miteinander verbundene Seitenelemente (10a) umfaßt, wobei jede Palette (10) mit Lagefixier- und Zentriermitteln (20) zur kor- rekten Lagefixierung der verschiedenen Teile der Baugruppe auf der Palette versehen ist.

11. Einrichtung nach Anspruch 10,
dadurch gekennzeichnet, daß
die Palette an der Führungsschiene (9a) geführte Räder (10c) aufweist und mit einem motorgetriebenen Transportwagen (26) verbunden ist, der ebenfalls an der Schiene (9a) geführt ist.

12. Einrichtung nach Anspruch 3,
dadurch gekennzeichnet, daß
jeder Transportwagen (40) Positionierungsmittel (76, 77) zur korrekten Lagefixierung eines Positionierungsrahmens (36) auf dem Transportwagen (40) aufweist.

13. Einrichtung nach Anspruch 1,
dadurch gekennzeichnet, daß
jeder Positionierungsrahmen (36) eine Basisplattform (37) umfaßt, die eine Mehrzahl von Stützpfeilern (38) trägt, von denen jeder wiederum wenigstens eine Festlegungs- oder Lagefixierungsvorrichtung (39) trägt.

14. Einrichtung nach Anspruch 13,
dadurch gekennzeichnet, daß
wenigstens einige der Festlegungsvorrichtungen (39) durch einen Transportwagen (71) getragen sind, der auf der Basisplattform (37) bewegbar ist, um zu ermöglichen, daß der Positionierungsrahmen (36) zur Verwendung mit Baugruppen verschiedener Längen angepaßt wird.

15. Einrichtung nach Anspruch 13,
dadurch gekennzeichnet, daß
der Förderstraße (9) eine unterirdische Straße zum Rückführen leerer Paletten (10) vom Ende der Förderstraße (9), von dem die geschweißten Baugruppen entfernt werden, zum Start der Förderstraße (9), wo begonnen wird, Teile einer neuen Baugruppe auf die Palette (10) aufzuladen, zugeordnet ist.

## Revendications

1. Equipement pour souder des sous-ensembles (1) de caisses de véhicules automobiles, constitués par des pièces de tôle emboutie préalablement assemblées lâchement, comprenant :
- un poste (P12) pour souder les structures (1) pré-assemblées ;
- une ligne de convoyeur (9) destinée à transporter successivement les structures (1) pré-assemblées au poste de soudage (P12) ;
- une pluralité de cadres de positionnement (36), chaque cadre de positionnement (36) individuel étant adapté à la forme spécifique d'un type respectif de structure (1) pré-assemblée et étant équipé de dispositifs de positionnement (39) destinés à brider toutes les parties pré-assemblées d'un type respectif de structure (1) dans les positions correctes pour le soudage ;
- des moyens de transport pour les cadres de positionnement (36), servant à déplacer les cadres (36) entre une pluralité de positions de repos périphériques (S2) et une position de travail au poste de soudage (P12), dans lequel un cadre (36) bride dans la position correcte une structure (l) pré-assemblée qui est située au poste de soudage (P12), lesdits moyens de transport comprenant un système servant à transporter les cadres (36) dans un plan situé au-dessous du plan de la ligne de convoyeur (9) de sous-ensembles,
- au moins un dispositif de soudage (22) servant à souder la structure (1) pré-asssemblée située au poste de soudage (P12),
caractérisé en ce que :
a) ledit système servant à transporter les cadres (36) comprend une position de base (S1) qui est séparée de la position de travail et est placée au-dessous du poste de soudage (P12),
b) les moyens de transport prévus pour les cadres de positionnement (36) comprennent en outre des moyens (52) servant à déplacer un cadre de positionnement (36) verticalement entre la position de base (S1), dans laquelle les dispositifs de positionnement (39) du cadre (36) sont séparés d'un sous-ensemble (1) qui est situé au poste de soudage (P12), et la position de travail, dans laquelle les dispositifs de positionnement (39) des cadres (36) peuvent positionner un sous-ensemble qui est situé au poste de soudage (P12),
c) le système servant à transporter les cadres (36) comprend aussi des moyens (40) du type chariot servant à amener simultanément un cadre de positionnement (36) de la position de base (S1) à une position de repos (S2) et un autre cadre de postionnement (36) à la position de base (S1), lesdits moyens (40) du type chariot pouvant se déplacer entre deux positions intermédiaires (S3) alignées dans une direction parallèle à la ligne de convoyeur (9) et disposées de part et d'autre de la position de base (S1), chaque position intermédiaire (S3) étant dans une position intermédiaire entre deux positions de repos périphériques (S2) alignées transversalement à la ligne de convoyeur (9).

2. Equipement selon la revendication 1, caractérisé en ce que le système servant à transporter les cadres de positionnement (36) comprend une paire de chariots (40) interconnectés rigidement entre eux et montés pour se déplacer selon la direction d'alignement de la position de base (S1) et des positions intermédiaires (S3), les chariots pouvant se déplacer simultanément entre une première position, dans laquelle un premier chariot (40) se trouve dans la position de base (S1) et un deuxième chariot (40) se trouve dans l'une des deux positions intermédiaires (S3), et une deuxième position, dans laquelle le premier chariot (40) se trouve dans l'autre position intermédiaire (S1) et le deuxième chariot (40) se trouve dans la position de base (S1), les chariots étant adaptés pour recevoir chacun un cadre de positionnement (36) de manière à permettre au cadre de se déplacer entre la position de base (S1) et une position intermédiaire (S3).

3. Equipement selon la revendication 2, caractérisé en ce qu'un châssis (47) est prévu au droit de chaque position de repos périphérique (S2) et porte des moyens servant à recevoir et supporter un cadre de positionnement (36) et des moyens servant à déplacer le cadre de positionnement (36) entre la position périphérique (S2) et la position intermédiaire (S3) qui lui est adjacente.

4. Equipement selon la revendication 3, caractérisé en ce que les deux chariots (40) ont des roues (41) qui coopèrent avec des rails de guidage (42) qui s'étendent parallèlement à la ligne de convoyeur (9), dans un plan situé au-dessous de la ligne de convoyeur (9), les chariots (40) étant reliés rigidement à un jeu longitudinal de dents (46) qui coopèrent avec un pignon d'entraînement (45) fixé solidairement en rotation à l'arbre de sortie d'un moteur d'entraînement à réducteur (44).

5. Equipement selon la revendication 4, caractérisé en ce que les moyens prévus au droit des positions de repos périphériques (S2) pour déplacer les cadres de positionnement (36) entre les positions de repos (S2) et la position intermédiaire respective (S3) comprennent un jeu de rouleaux (48) entraînés par moteur, chaque chariot (40) étant aussi muni d'un jeu correspondant de rouleaux (51) entraînés par moteur.

6. Equipement selon la revendication 1, caractérisé en ce que les moyens servant à déplacer un cadre de positionnement (36) verticalement entre la position de base (S1) et la position de travail comprennent une paire de coulisseaux (52) mobiles dans la direction verticale, équipés de supports (54) servant à tenir et supporter le cadre de positionnement (36).

7. Equipement selon la revendication 1, caractérisé en ce qu'il comprend une pluralité de robots de soudage programmables.

8. Equipement selon la revendication 1, caractérisé en ce qu'au moins un cadre de positionnement est agencé pour agir sur deux types de sous-ensembles qui diffèrent l'un de l'autre dans une mesure limitée.

9. Equipement selon la revendication 1, caractérisé en ce que la ligne de convoyeur (9) destinée à transporter des sous-ensembles à souder comprend un rail de guidage (9a) et une pluralité de palettes (10) entraînées au moteur, guidées sur le rail (9a) et adaptées chacune pour supporter un sous-ensemble à souder.

10. Equipement selon la revendication 9, caractérisé en ce que chaque palette (10) est constituée par un châssis métallique comprenant deux éléments latéraux (10a) reliés par une pluralité d'éléments transversaux (10c), chaque palette (10) étant munie de moyens de placement et de centrage (20) servant à placer lesdits éléments du sous-ensemble correctement sur la palette.

11. Equipement selon la revendication 10, caractérisé en ce que la palette possède des roues (17) guidées sur le rail de guidage (9a) et est reliée à un chariot (26) entraîné par moteur qui est lui aussi guidé sur le rail (9a).

12. Equipement selon la revendication 3, caractérisé en ce que chaque chariot (40) possède des moyens de positionnement (76, 77) pour placer correctement un cadre de positionnement (36) sur le chariot (40).

13. Equipement selon la revendication 1, caractérisé en ce que chaque cadre de positionnement (36) comprend une plate-forme de base (37) portant une pluralité de piliers supports (38) dont chacun supporte à son tour au moins un dispositif de bridage ou de placement (39).

14. Equipement selon la revendication 13, caractérisé en ce qu'au moins certains des dispositifs de bridage (39) sont portés par un chariot (71) qui peut se déplacer sur la plate-forme de base (37) pour permettre au cadre de positionnement (36) de s'adapter pour pouvoir être utilisé avec des sous-ensembles de différentes longueurs.

15. Equipement selon la revendication 13, caractérisé en ce qu'une ligne souterraine est associée à la ligne de convoyeur (9) pour renvoyer les palettes vides (10) de l'extrémité finale de la ligne de convoyeur (9), d'où les sous-ensembles soudés sont enlevés, à l'extrémité de départ de la ligne de convoyeur (9), où des parties d'un nouveau sous-ensemble commencent à être chargées sur la palette (10).
